# EUROPEAN PATENT APPLICATION

(11) **EP 2 317 006 A1**
(43) Date of publication of application: **04.05.2011**
(21) Application number: 09806639.2
(22) Date of filing: 27.07.2009
(51) Int. Cl.: D06M 11/79, C01B 33/18, C08K 3/36, C08K 9/06, C08L 79/02, C09K 3/18

(54) **ULTRAHYDROPHOBIC POWDER, STRUCTURE WITH ULTRAHYDROPHOBIC SURFACE, AND PROCESSES FOR PRODUCING THESE**

(30) Priority: 11.08.2008 JP 2008206890; 11.12.2008 JP 2008315543
(71) Applicant: KAWAMURA INSTITUTE OF CHEMICAL RESEARCH, Sakura-shi Chiba 285-0078 (JP); DIC Corporation, Tokyo 174-8520 (JP)
(72) Inventor: JIN Ren-Hua, Sakura-shi Chiba 285-0078 (JP); YUAN Jian-Jun, Sakura-shi Chiba 285-8668 (JP)
(74) Representative: Lloyd, John Scott
(86) International application number: PCT/JP2009/063327
(87) International publication number: WO 2010/018744

(57) **Abstract**

A process for producing superhydrophobic powders comprising silica as the main component and the surface of the powders have a contact angle with water of 150° or larger; and a structure having a superhydrophobic surface comprising the powders. The process comprised: introducing hydrophobic groups into the silica present in the surface of aggregates of organic/inorganic composite nanofibers obtained by combining a polymer, which is an organic substance, with silica, which is an inorganic substance, on the order of nanometer or into the silica obtained by calcining the organic/inorganic composite nanofibers and removing the polymer there from; and thereby making powders composed of the aggregates superhydrophobic. Also provided is a superhydrophobic powders obtained by the process. The structure having a superhydrophobic surface is obtained by fixing the superhydrophobic powders to a surface of a solid substrate.

## Description

### Technical Field

The present invention relates to superhydrophobic powders having a basic structure composed of an aggregate of silica-based nanofibers having hydrophobic groups, a structure with a superhydrophobic surface including the powders, and processes for producing these.

### Background Art

When a water droplet contacts a solid surface, a contact angle range of 150° or larger where the water droplet contacts the surface is defined as superhydrophobicity. A contact angle range of 70° to 150° where the water droplet contacts the surface is defined as hydrophobicity. In general, hydrophobicity is exhibited when a surface is covered with a molecular residue having a low surface tension. However, it is difficult to exhibit superhydrophobicity using only a molecular residue having a low surface tension.

On the other hand, many living matters of the natural world exhibit superhydrophobicity. For example, lotus leaves, rice plant leaves, cabbage leaves, and the like have superhydrophobicity (super-water repellency) in which water droplets are completely repelled. For example, it is known that the superhydrophobicity of a lotus leaf is deeply related to the surface structure of the leaf. Specifically, it is known that nanofibers extend throughout the entire surface to form a surface layer, micron-sized projections similar to aggregates of nanofibers make up an outermost layer on the surface layer at certain intervals, and in addition, hydrophobic wax is present on the surfaces of these nanofibers. This suggests that, in order to exhibit superhydrophobicity, it is most important to control the surface roughness, that is, the surface structure and shape in the nano-dimension.

The structural principle for exhibiting superhydrophobicity, which is also called "lotus effect", has been used as a guideline for developing many methods for designing an artificial lotus-like structure. With the advancement of nanomaterials, in recent years, various superhydrophobic materials have been developed. For example, it has been reported that the contact angle is increased to 170° or larger by regularly arranging carbon nanotubes on a surface of a substrate (refer to, for example, NPL 1). It has also been reported that the surface contact angle is controlled to be 170° or larger by growing polypyrrole nanofibers on a silicon surface coated with platinum by an electrochemical process (refer to, for example, NPL 2). Furthermore, superhydrophobicity is exhibited by forming a nanocrystal seeds layer composed of zinc oxide on a surface of a glass substrate at a temperature of 400°C or higher, and then growing a large number of rod-like zinc oxide nanofibers thereon (refer to, for example, NPL 3).

As for a simple process, for example, it has been reported that a network structure composed of polypropylene nanoparticles is formed by adding a certain poor solvent to a solution of polypropylene, casting the resultant mixture onto a surface of a substrate, and then adjusting the temperature, whereby the contact angle is increased to 160° (refer to, for example, NPL 4). Alternatively, superhydrophobicity can be exhibited by providing glass made of oxides of silicon, boron, and sodium with a phase separation structure, and further etching the glass by a chemical treatment to induce an irregular structure on the surface, and lastly allowing a fluorine compound to react on the surface (refer to, for example, PTL 1). Furthermore, it is also known that an superhydrophobic surface is constructed by preparing a multilayer film of a polyarylamine and polyacrylic acid, and then treating a surface of the multilayer film by a chemical method to induce a surface porous structure, immobilizing silica nanoparticles thereon, and then lastly hydrophobing with a silane coupling agent having a fluorinated alkyl group (refer to, for example, PTL 2).

Many publicly known documents frequently cover superhydrophobic films and processes for preparing the films. However, those often correspond to techniques for processing irregularities (i.e., the roughness) on a surface of a substrate, the surface treatment process tends to become complex, and the cost is also high. In a case of a superhydrophobic surface in which an organic polymer is used as a base, although the cost is low, the resulting superhydrophobic surface has low solvent resistance and corrosion resistance. Thus, there is a problem in terms of practical use.

There are very few studies on making powders there self superhydrophobic (super-water repellent) or on making a superhydrophobic film by using such superhydrophobic powders. However, according to one recent example, it has been found that a powder of iron oxide (α-Fe₂O₃) having a size of 2 to 3 µm exhibits superhydrophobicity when the powder has a flower petal-like structure on the surface thereof (refer to, for example, NPL 5). However, the range of applications of the technology proposed in NPL 5 is narrow, and the technology is not one using an industrially simple method.

Meanwhile, an example of superhydrophobic powders in the natural world is believed to be each leg of a water strider, which corresponds to aggregates of superhydrophobic powders. The structure of the legs of the water strider is superhydrophobic. When the buoyant force of water generated due to the superhydrophobic structure and surface tension are added, the body of the water strider having a weight 25 times or more that of the legs can remain above the water surface. When an elastic force is added thereto, the water strider can run on the water surface as if flying (refer to, for example, NPL 6). The development of superhydrophobic powders has a high industrial utility value. In particular, if such superhydrophobic powders can be synthesized by a simple production method using, as a raw material, a silicon compound, which exists in a large amount in the natural world, the applications of the powders can be further extended. Thus, the development of superhydrophobic powders is a very promising subject.

### Citation List

### Patent Literature

PTL 1: Japanese Unexamined Patent Application Publication (Translation of PCT Application) No. 2008-508181
PTL 2: U.S.P Application No. 2006/029808 specification

### Non Patent Literature

NPL 1: Sun et al., Acc. Chem. Res., 2005, 38, 644-652
NPL 2: Li et al., J. Mater. Chem., 2008, 18, 2276-2280
NPL 3: Feng et al., J. Am. Chem. Soc., 2004, 126, 62-63
NPL 4: Erbil et al., Science, 2003, 299, 1377-1380
NPL 5: Cao et al., Appl. Phys. Lett., 2007, 91. 034102
NPL 6: Gao et al., Nature 2004, 432, 36

### Summary of Invention

### Technical Problem

An object of the present invention is to provide a process for producing superhydrophobic powders which contains silica as a main component and the surface of which has a contact angle with water of 150° or larger simply and with a good reproducibility, and a structure with an superhydrophobic surface including the powders.

### Solution to Problem

The inventors of the present invention have conducted intensive studies in order to achieve the above object. As a result, it was found that a hydrophobic group can be introduced, by a simple method, into silica present on a surface of aggregates of organic/inorganic composite nanofibers obtained by combining a polymer, which is an organic substance, with silica, which is an inorganic substance, on the nanometer order or silica obtained after calcining the organic/inorganic composite nanofibers to remove the polymer from the nanofibers, and that a powder composed of the aggregates thus obtained, in which the hydrophobic group has been introduced, exhibits superhydrophobicity. This finding resulted in completion of the present invention.

Specifically, the present invention provides superhydrophobic powders containing aggregates of organic/inorganic composite nanofibers, wherein the nanofibers are constructed with silica shell which coats filaments of a polymer having a linear polyethyleneimine backbone having a hydrophobic group, and a simple process for producing the superhydrophobic powders.

Furthermore, the present invention provides superhydrophobic powders obtained by introducing a hydrophobic group into silica constituting aggregates of nanofibers containing the silica as a main constituent component, and a process for producing the superhydrophobic powders.

In addition, the present invention provides a structure with a superhydrophobic surface including the superhydrophobic powders obtained above and a solid substrate, the superhydrophobic powders being fixed on the solid substrate, and a process for producing the structure.

### Advantageous Effects of Invention

According to the superhydrophobic powders of the present invention, by applying the superhydrophobic powders onto a surface of a substrate composed of any material and having any shape, all type of solid surface can be converted to superhydrophobic. These superhydrophobic powders can be applied to protective films for metals, metal oxides, fibers, wood, paper, leather, and plastics, all of which may be rusted, corroded, or stained by water. More specifically, the superhydrophobic powders can be applied to protective films for structures such as buildings, car bodies, ships and vessels, container structures, packages, glassware, earthenware (lavatory pan, entire bathroom), pools, water pipes, electric wires, electric lamps, and various covers. Furthermore, the superhydrophobic powders can also be applied to surface coating for household electrical appliances such as a refrigerator, a microwave oven, and a washing machine; and electrical products for communication, such as a personal computer, a television, and a mobile phone. In addition, the superhydrophobic powders can also be applied to fuel cell devices related to energy conversion.

### Brief Description of Drawings

[Fig. 1] Fig. 1 includes scanning electron micrographs of powders obtained in Synthesis Example 1.
[Fig. 2] Fig. 2 includes scanning electron micrographs of powders after calcining obtained in Synthesis Example 2.
[Fig. 3] Fig. 3 includes scanning electron micrographs of superhydrophobic powders 2 obtained in Example 2.
[Fig. 4] Fig. 4 shows a superhydrophobic film (upper figure) on a filter paper in Example 5, and a contact image of a water droplet formed on a surface of the film.
[Fig. 5] Fig. 5 is a contact image of a water droplet formed on a surface of a film prepared in Example 7.
[Fig. 6] Fig. 6 includes scanning electron micrographs of a surface of a film prepared in Example 7. The left figure is a photograph in a large-area range, and the right figure is an enlarged photograph of the portion surrounded by the circle of the left figure.
[Fig. 7] Fig. 7 includes SEM photographs of powders (I-2) obtained in Synthesis Example 3. Upper figure: low magnification, Lower figure: high magnification
[Fig. 8] Fig. 8 includes SEM photographs of powders (II-2) obtained in Synthesis Example 4. Upper figure: low magnification, Lower figure: high magnification
[Fig. 9] Fig. 9 includes photographs showing a water contact angle in Example 14.
[Fig. 10] Fig. 10 includes TEM photographs of superhydrophobic powders 7 obtained in Example 14. Left figure: before adsorption of polyethylmethacrylate, Right figure: after adsorption
[Fig. 11] Fig. 11 is a thermal analysis (TG-DTA) chart of the superhydrophobic powders 7 obtained in Example 14.
[Fig. 12] Fig. 12 includes photographs showing wettability on surfaces of films prepared after the powders obtained in Example 14 which treated with various solvents.
[Fig. 13] Fig. 13 includes photographs obtained when the powder films shown in Fig. 12 were dried at 80°C for two hours, and wettability of water was then observed again.

### Description of Embodiments

The inventors of the present invention have already provided a silica-containing nanostructure (particle) having a complex shape and including a nanofiber as a basic unit, and a process for producing the nanostructure. The nanostructure is obtained by using, as a reaction field, a crystalline aggregate which is obtained by growing a polymer having a linear polyethyleneimine backbone in an aqueous medium in a self-assembling manner, hydrolytically condensing an alkoxysilane in a solution on the surface of the aggregate to precipitate silica (refer to Japanese Unexamined Patent Application Publication No. 2005-264421, Japanese Unexamined Patent Application Publication No. 2005-336440, Japanese Unexamined Patent Application Publication No. 2006-063097, and Japanese Unexamined Patent Application Publication No. 2007-051056).

The basic principle of this technology is to spontaneously grow crystalline aggregates of a polymer having a linear polyethyleneimine backbone in a solution. Once the crystalline aggregates are formed, a silica source is then simply mixed in a dispersion liquid of the crystalline aggregates so that silica is naturally precipitated only on the surfaces of the crystalline aggregates (so-called sol-gel reaction). A silica-containing nanostructure obtained by this method basically includes a nanofiber as a unit for forming the structure, and the shape of the entire structure is induced by the spatial arrangement of the units. Thus, the resultant structure is a powder including a large number of gaps on the nanolevel and having a large surface area.

Such a powder has a structure that is very similar to the basic structure that is necessary for exhibiting superhydrophobicity in the natural world. Specifically, nanofibers are collected to form an aggregate having a size on the micrometer order. Accordingly, it is believed that superhydrophobicity can be exhibited as long as the surface of this powder is modified with a chemical residue having a low surface tension.

On the basis of this idea, the inventors of the present invention found that, by introducing a hydrophobic group into the surface of a powder which is a silica-containing nanostructure on the micrometer order including, as a basic structure, a nanofiber induced by a polymer having a linear polyethyleneimine backbone (which represents a structure composed of a basic unit on the nanometer order, the basic unit containing silica), the powder itself can be made superhydrophobic. The present invention will now be described in detail.

In the present application, the filament refers to a product obtained when a plurality of linear polyethyleneimine backbone moieties present in polymer chains having a linear polyethyleneimine backbone used in the present invention crystallize in the presence of water molecules, whereby the polymer chains aggregate and grow into fibers. A sol-gel reaction occurs on the surface of this filament, thereby forming an organic/inorganic composite nanofiber in which the filament is coated with silica. During this reaction, a plurality of organic/inorganic nanofibers bond to each other with silica or aggregate. Thus, a silica-containing nanostructure (particle) which is an aggregate of the organic/inorganic nanofibers is formed.

### [Polymer (A) having linear polyethyleneimine backbone (a)]

A polymer (A) having a linear polyethyleneimine backbone (a) used in the present invention may be a linear-shaped, star-shaped, or comb-shaped homopolymer or copolymer having other repeating units. In a case of a copolymer, the molar ratio of the linear polyethyleneimine backbone (a) in the polymer (A) is preferably 20% or more from the standpoint that a stable filament can be formed, and a block copolymer in which the number of repeating units of the polyethyleneimine backbone (a) is 10 or more is more preferable.

The polymer (A) having the linear polyethyleneimine backbone (a) preferably has a higher crystalline aggregate formation capability. Accordingly, in both the case of a homopolymer and the case of a copolymer, the molecular weight corresponding to the linear polyethyleneimine backbone (a) portion is preferably in the range of 500 to 1,000,000. The polymer (A) having the linear polyethyleneimine backbone (a) can be obtained as a commercially available product or obtained by a synthesis method which has been disclosed by the inventors of the present invention (refer to the above patent literatures).

### [Silica (B)]

Superhydrophobic powders provided by the present invention have basic structure composed of an aggregate of organic/inorganic composite nanofibers (I) constructed with silica (B) shell which coats filaments of a polymer (A) having a linear polyethyleneimine backbone (a) or an aggregate of nanofibers (II) containing silica (B) as a main constituent component, the nanofibers (II) being obtained by removing the polymer (A) from the aggregate of the organic/inorganic composite nanofibers (I) by calcining.

The silica (B) is obtained, in the presence of filaments of the polymer (A), on the surfaces of the filaments by a sol-gel reaction. As a silica source that is necessary for forming the silica (B), for example, alkoxysilanes, water glass, ammonium hexafluorosilicate, or the like can be used.

As the alkoxysilanes, tetramethoxysilane, an oligomer of a methoxysilane condensation product, tetraethoxysilane, or an oligomer of an ethoxysilane condensation product can be suitably used. Examples of the alkoxysilanes further include alkyl-substituted alkoxysilanes such as methyltrimethoxysilane, methyltriethoxysilane, ethyltrimethoxysilane, ethyltriethoxysilane, n-propyltrimethoxysilane, n-propyltriethoxysilane, iso-propyltrimethoxysilane, and iso-propyltriethoxysilane. Examples thereof further include 3-chloropropyltrimethoxysilane, 3-chloropropyltriethoxysilane, vinyltrimethoxysilane, vinyltriethoxysilane, 3-glycidoxypropyltrimethoxysilane, 3-glycidoxypropyltriethoxysilane, 3-aminopropyltrimethoxysilane, 3-aminopropyltriethoxysilane, 3-mercaptopropyltrimethoxysilane, 3-mercaptotriethoxysilane, 3,3,3-trifluoropropyltrimethoxysilane, 3,3,3-trifluoropropyltriethoxysilane, 3-methacryloxypropyltrimethoxysilane, 3-methacryloxypropyltriethoxysilane, phenyltrimethoxysilane, phenyltriethoxysilane, (p-chloromethyl)phenyltrimethoxysilane, (p-chloromethyl)phenyltriethoxysilane, dimethyldimethoxysilane, dimethyldiethoxysilane, diethyldimethoxysilane, and diethyldiethoxysilane. These alkoxysilanes may be used alone or as a mixture.

Furthermore, another alkoxy metal compound may be mixed with the silica source and used. Examples of the compound that can be used include tetrabutoxy titanium, tetraisopropoxy titanium, an aqueous solution of titanium bis(ammonium lactate)dihydroxide, which is stable in an aqueous medium, an aqueous solution of titanium bis(lactate), a propanol/water mixed solution of titanium bis(lactate), titanium(ethylacetoacetate)diisopropoxide, titanium sulfate, and ammonium hexafluorotitanate.

### [Metal ion]

Metal ions can be stably incorporated in the organic/inorganic composite nanofibers (I). Accordingly, superhydrophobic powders containing metal ions can also be obtained.

Since the linear polyethyleneimine backbone (a) in the polymer (A) has a strong coordination capability to a metal ion, the metal ion is coordinately bonded to an ethyleneimine unit in the backbone to form a metal ion complex. The metal ion complex is obtained by coordination of the metal ion to the ethyleneimine unit. Therefore, unlike a process of the formation of an ionic bond or the like, regardless of whether the metal ion is a cation or an anion, a complex can be formed by coordination of the metal ion to an ethyleneimine unit. Accordingly, the type of metal of the metal ion is not limited as long as the metal ion can be coordinately bonded to an ethyleneimine unit in the polymer (A). The metal may be any of an alkali metal, an alkaline earth metal, a transition metal, a semimetal, a lanthanum-based metal, a metal compound of a polyoxometalate, and the like. One type of metal may be used, or two or more types of metal may be mixed and used.

Examples of the alkali metal include Li, Na, K, and Cs. Examples of a counteranion of the ion of the alkali metal include Cl, Br, I, NO₃, SO₄, PO₄, ClO₄, PF₆, BF₄, and F₃CSO₃.

Examples of the alkaline earth metal include Mg, Ba, and Ca.

A metal ion of a transition metal can be suitably used, even when the metal ion is a transition metal cation (Mⁿ⁺), an acid radical anion (MOₓⁿ⁻) in which a transition metal is bonded to oxygen, or an anion (MLₓⁿ⁻) in which a transition metal is bonded to a halogen. It should be noted that the term "transition metal" in this description refers to Sc and Y in group 3 of the periodic table and transition metal elements present in the fourth period to the sixth period in groups 4 to 12.

Examples of the transition metal cation include cations (Mⁿ⁺) of various types of transition metal, e.g., monovalent, divalent, trivalent, or tetravalent cations of Ti, V, Cr, Mn, Fe, Co, Ni, Cu, Zn, Y, Zr, Mo, Ru, Rh, Pd, Ag, Cd, W, Os, Ir, Pt, Au, or Hg. A counteranion of these metal cations may be any of Cl, NO₃, SO₄, a polyoxometalate anion, and an organic anion of a carboxylic acid. However, when the cations are those of, for example, Ag, Au, or Pt, which are easily reduced by an ethyleneimine backbone, it is preferable that an ion complex be prepared by suppressing the reduction reaction, for example, by adjusting the pH to an acidic condition.

Examples of the transition metal anion include various types of transition metal anions (MOₓⁿ⁻), e.g., anions of MnO₄, MoO₄, ReO₄, WO₃, RuO₄, CoO₄, CrO₄, VO₃, NiO₄, and UO₂.

The metal ions in the present invention may be the form of a metal compound of a polyoxometalate in which the above-mentioned transition metal anion is immobilized in silica (B) via metal cations that are coordinated to the ethyleneimine units in the polymer (A). Specific examples of the polyoxometalates include molybdates, tungstates, and vanadates combined with transition metal cations.

Furthermore, anions (MLₓⁿ⁻) including various types of metal, for example, anions in which a metal is coordinated to a halogen, such as AuCl₄, PtCl₆, RhCl₄, ReF₆, NiF₆, CuF₆, RuCl₆, and In₂Cl₆ can also be preferably used for forming an ion complex.

Examples of the semimetal ion include ions of A1, Ga, In, Tl, Ge, Sn, Pb, Sb, and Bi. Among these ions, ions of Al, Ga, In, Sn, Pb, and Tl are preferable.

Examples of the lanthanum-based metal ions include trivalent cations of La, Eu, Gd, Yb, Eu, and the like.

### [Metal nanoparticles]

As described above, in the present invention, metal ions can be incorporated in the organic/inorganic composite nanofibers (I). Accordingly, among these metal ions, metal ions that are easily reduced by a reduction reaction may be converted into metal nanoparticles, whereby superhydrophobic powders containing metal nanoparticles can also be obtained.

Examples of the type of metal of the metal nanoparticles include copper, silver, gold, platinum, palladium, manganese, nickel, rhodium, cobalt, ruthenium, rhenium, molybdenum, and iron. The metal nanoparticles in the superhydrophobic powders may be one type or two or more types of metal nanoparticles. Among these types of metal, silver, gold, platinum, and palladium are particularly preferable because metal ions thereof are spontaneously reduced at room temperature or in a heating state after the metal ions are coordinated to ethyleneimine units.

The size of the metal nanoparticles in the superhydrophobic powders can be controlled to be in the range of 1 to 20 nm. The metal nanoparticles can be immobilized inside or on the outer surface of the organic/inorganic composite nanofibers (I) constructed the polymer (A) and the silica (B).

### [Organic coloring matter molecule]

The linear polyethyleneimine backbone (a) in the polymer (A) can form a physical bond structure with a compound having an amino group, a hydroxy group, a carboxylic acid group, a sulfonic acid group, or a phosphate group via a hydrogen bond and/or electrostatic attraction. Accordingly, for example, organic coloring matter molecules having any of these functional groups can be incorporated in the superhydrophobic powders.

As the organic coloring matter molecules, a monofunctional acidic compound or a bifunctional or higher-functional polyfunctional acidic compound can be preferably used.

Specifically, examples thereof include aromatic acids such as tetraphenylporphyrin tetracarboxylic acid and pyrenedicarboxylic acid; aromatic or aliphatic sulfonic acids such as naphthalenedisulfonic acid, pyrenedisulfonic acid, pyrenetetrasulfonic acid, anthraquinonedisulfonic acid, tetraphenylporphyrin tetrasulfonic acid, phthalocyanine tetrasulfonic acid, and piperazinediethanesulfonic acid (PIPES); and azo dyes such as series of acid yellow, acid blue, acid red, direct blue, direct yellow, and direct red. In addition, coloring matters having a xanthene skeleton, for example, coloring matters of series of rhodamine, erythrosine, and eosine can also be used.

### [Organic/inorganic composite nanofibers (I)]

In the present invention, the size of the organic/inorganic composite nanofibers (I) can be adjusted by the molecular weight, the shape, the content of the linear polyethyleneimine backbone (a), and the like of the polymer (A) used, and the type, the use ratio, and the like of the silica source used. In particular, an organic/inorganic composite nanofiber (I) having a thickness of 10 to 100 nm and an aspect ratio of 10 or more can be easily produced.

The content of the polymer (A) in the organic/inorganic composite nanofibers (I) can be adjusted to 5% to 30% by mass. As described above, the polymer (A) is contained in the form of filament.

The organic/inorganic composite nanofibers (I) are randomly arranged in a three-dimensional space in a process of preparation thereof (during a sol-gel reaction) to form aggregates (silica-containing nanostructures) each having a size of 2 to 100 µm. A powder composed of such aggregates has a surface area in the range of 50 to 200 m²/g.

Processes for producing the organic/inorganic composite nanofibers (I) and aggregates thereof may be any method described in the patent literatures which have already been provided by the inventors of the present invention.

### [Nanofibers (II) containing silica as main constituent component]

When the above-described aggregates of the organic/inorganic composite nanofibers (I) are calcined by heating, the polymer (B) contained in the aggregates is removed while maintaining the shape thereof. Thus, aggregates of nanofibers (II) containing silica as a main constituent component can be obtained. Herein, the phrase "containing silica as a main constituent component" means that the shape of each nanofiber is formed by silica (B) although, for example, carbon atoms and the like in the polymer (A) or the organic coloring matter molecule used in combination are carbonized and contained because the calcining has not sufficiently been performed, or metal atoms may be contained in the case where metal ions or metal nanoparticles are used in combination. The content of silica (B) is usually 90% by mass or more and preferably 98% by mass or more.

It is sufficient that the calcining temperature is 500°C or higher. From the standpoint of energy efficiency, the calcining temperature is preferably 800°C or lower. The calcining time can be appropriately set depending on the temperature. At a temperature of higher than 500°C, one hour is sufficient. At a temperature of about 500°C, the calcining is preferably performed for two hours or more.

The structure of the aggregate obtained after calcining is not changed from that before calcining. The nanofibers (II) have a thickness of 10 to 100 nm and an aspect ratio of 10 or more. Aggregates in which the nanofibers having this thickness are randomly arranged in a three-dimensional space each still maintain a size of 2 to 100 µm. The specific surface area of the powder obtained after calcining is larger than that before calcining, and is approximately 100 to 400 m²/g.

### [Hydrophobizing treatment]

In the present invention, to make superhydrophobic powders, it is necessary to introduce hydrophobic groups into silica (B). This introduction can be easily performed by contacting a compound having a hydrophobic group. The method of the introduction includes introduction by chemical bonding and introduction by physical adsorption.

### [Introduction of hydrophobic group by chemical bonding]

Silica (B) is present on the surfaces of the above-described organic/inorganic composite nanofibers (I) or the nanofibers (II) containing silica as main constituent component, and a part of the silica (B) is still present in the form of silanol group. A compound capable of reacting with this silanol group and having a hydrophobic group can be chemically bonded to the silica (B). Accordingly, the superhydrophobic powders obtained by introducing hydrophobic groups by chemical bonding are superhydrophobic powders including organic/inorganic composite nanofibers (I) constructed with silica (B) shell which coats filaments of a polymer (A) having a linear polyethyleneimine backbone (a) to which the compounds (X1) having a hydrophobic group are chemically bonded.

Examples of the hydrophobic group include alkyl groups having 1 to 22 carbon atoms, aromatic groups which may have a substituent (wherein the substituent is a hydrophobic group such as an alkyl group, fluorinated alkyl group, or partially fluorinated alkyl group having 1 to 22 carbon atoms), fluorinated alkyl groups having 1 to 22 carbon atoms, and partially fluorinated alkyl groups having 1 to 22 carbon atoms.

In order to efficiently introduce the compounds (X1) having such a hydrophobic group into silica (B) there are present on the surfaces of the aggregates of the nanofibers (I) or nanofibers (II), the compounds (X1) is preferably a single silane coupling agent (x) having a hydrophobic group or a mixture of two or more silane coupling agents (x) each having a hydrophobic group. In this case, by controlling the amount contacting the silane coupling agents (x) having the hydrophobic group, the resulting powder can be controlled to be hydrophobic to superhydrophobic.

Examples of the silane coupling agents (x) include alkyltrimethoxysilanes and alkyltrichlorosilanes in which the number of carbon atoms of the alkyl group is 1 to 22, such as methyltrimethoxysilane, dimethyldimethoxysilane, ethyltrimethoxysilane, ethyltriethoxysilane, n-propyltrimethoxysilane, n-propyltriethoxysilane, iso-propyltrimethoxysilane, iso-propyltriethoxysilane, pentyltrimethoxysilane, and hexyltrimethoxysilane.

As a silane coupling agent having a fluorine atom, which is effective to reduce the surface tension, a silane coupling agent having a (partially) fluorinated alkyl group, for example, 3,3,3-trifluoropropyltrimethoxysilane or (tridecafluoro-1,1,2,2-tetrahydrooctyl)trichlorosilane can also be used.

Examples of the silane coupling agent having an aromatic group include phenyltrimethoxysilane, phenyltriethoxysilane, (p-chloromethyl)phenyltrimethoxysilane, and (p-chloromethyl)phenyltriethoxysilane.

### [Introduction of reactive functional groups]

To the above-described superhydrophobic powders into which superhydrophobic groups have been introduced by chemical bonding, reactive functional groups are preferably introduced so that the superhydrophobic powders can be easily fixed to a solid substrate having any shape and composed of any material. This introduction of the reactive functional groups are preferably performed by a method similar to the above-mentioned introduction of the hydrophobic groups, that is, by a method of contacting a silane coupling agents (y) having a reactive functional group.

Examples of the silane coupling agents (y) having the reactive functional group include silane coupling agents having a (meth)acryloyl group, a glycidyl group, an amino group, a hydroxy group, or a mercapto group, such as γ-methacryloylpropyltrimethoxysilane, γ-glycidoxypropyltrimethoxysilane, γ-(2-aminoethyl)aminopropyltrimethoxysilane, γ-(2-hydroxylethyl)aminopropyltrimethoxysilane, γ-(2-aminoethyl)aminopropyltriethoxysilane, γ-(2-hydroxylethyl)aminopropyltriethoxysilane, γ-(2-aminoethyl)aminopropylmethyldimethoxysilane, γ-(2-aminoethyl)aminopropylmethyldiethoxysilane, γ-(2-hydroxylethyl)aminopropylmethyldimethoxysilane, γ-(2-hydroxylethyl)aminopropylmethyldiethoxysilane, γ-(N,N-di-2-hydroxylethyl)aminopropyltriethoxysilane, γ-aminopropyltrimethoxysilane, γ-aminopropyltriethoxysilane, γ-aminopropylmethyldimethoxysilane, γ-aminopropylmethyldiethoxysilane, γ-(N-phenyl)aminopropyltrimethoxysilane, γ-mercaptopropyltrimethoxysilane, and γ-mercaptophenyltrimethoxysilane. These may be used alone or in combination of two or more silane coupling agents.

An introduction ratio of the reactive functional group is not particularly limited. However, from the standpoint of achieving a balance between the ease of fixing to a solid substrate and the maintenance of the superhydrophobicity, a molar ratio (X)/(X + Y) of the hydrophobic groups (X) to the reactive functional groups (Y) bonded to silica (B) is preferably in the range of 0.2 to 1.

### [Process for producing superhydrophobic powders to which superhydrophobic groups are introduced by chemical bonding]

As for a process for producing the above-described superhydrophobic powders, it is sufficient that aggregates of the organic/inorganic composite nanofibers (I) or aggregates of the nanofibers (II) are dispersed in a solvent, and the resulting dispersion liquid is mixed with compounds having a hydrophobic group. Preferably, the dispersion liquid is mixed with a solution of the silane coupling agents (x) having the hydrophobic group or a solution containing the silane coupling agents (x) having the hydrophobic group and the silane coupling agents (y) having the reactive functional group.

The silane coupling agents (x) having the hydrophobic group and the silane coupling agents (y) having the reactive functional group may be dissolved in a solvent such as chloroform, methylene chloride, cyclohexanone, xylene, toluene, ethanol, or methanol and used. These solvents may be used alone or as a mixture.

In the above solution, when the total concentration of the silane coupling agents (x) and (y) is 1% to 5% by mass, these coupling agents (x) and (y) can be suitably used. In particular, these coupling agents (x) and (y) are more preferably used as a mixture with an ethanol solution of 1 to 5% by mass of aqueous ammonia. As for a volume ratio in preparation of such a mixture, the volume of the ethanol solution of aqueous ammonia is preferably 5 to 10 times the volume of the solution of the silane coupling agents.

Wen the silane coupling agents (x) having the hydrophobic group and the silane coupling agents (y) having the reactive functional group are used, a molar ratio (x)/(x + y) is preferably in the range of 0.2 to 1 so that the molar ratio of the hydrophobic groups and the reactive functional groups to be introduced into the resulting superhydrophobic powders is controlled to be the above-mentioned preferable range.

By mixing a dispersion of powders composed of aggregates of the nanofibers (I) or (II) with the above mixed solution, silane of the silane coupling agents is introduced into silica (B) present on the surfaces of the aggregates with a Si-O-Si bond, thus obtaining superhydrophobic powders.

When aggregates composed of the organic/inorganic composite nanofibers (I), in which the powder contains the polymer (A), are used, the time during which the dispersion liquid of the aggregates is mixed with the solution is preferably 10 to 24 hours. On the other hand, when a powder of aggregates composed of the nanofibers (II), which do not contain the polymer (A), is used, the hydrophobic group can be easily introduced for a mixing time of 2 hours or more. The mixing is conducted under stirring for a certain period of time, and the resulting powder is then filtered or centrifuged. The solid component is washed with a solvent such as toluene, chloroform, hexane, or cyclohexane and is dried at ordinary temperature. Thus, superhydrophobic powders of the present invention can be obtained.

### [Introduction of hydrophobic group by physical adsorption]

The silica forming the surfaces of the aggregates of the nanofibers (I) or the nanofibers (II) has a capability of physically adsorbing compounds (X2) having a hydrophobic group. By applying this capability, the free energy of the surfaces of the nanofibers (I) or the nanofibers (II) is decreased, and thus superhydrophobic powders can be produced.

Examples of the compounds (X2) having the hydrophobic group include hydrophobic polymers (X2-1), amphiphilic polymers (X2-2), long-chain alkyl group-containing compounds (X2-3), and fluorine-containing compounds (X2-4). It is sufficient that the compounds (X2) having the hydrophobic group have a moiety (group) that exhibits hydrophobicity in the compounds or exhibits hydrophobicity as a compound. For example, although a specific "hydrophobic group" is not present in polypropylene oxide or the like described below, such a compound exhibits hydrophobicity in the respect that the compound is not miscible with water in any ratio. Accordingly, in the present application, such a compound is also included in the compounds (X2) having the hydrophobic group.

As the hydrophobic polymers (X2-1), for example, poly(meth)acrylates can be suitably used. Specifically, examples thereof include polymethyl(meth)acrylate, polyethyl(meth)acrylate, polybutyl(meth)acrylate, polybenzyl(meth)acrylate, polycyclohexyl(meth)acrylate, poly(tert-butyl(meth)acrylate), polyglycidyl(meth)acrylate, and polypentafluoropropyl(meth)acrylate. In addition, examples of the hydrophobic polymers (X2-1) include polymers that are not easily dissolved in water, such as general-purpose polystyrene, polyvinyl chloride, polyvinyl acetate, epoxy resins, polyesters, polyimides, and polycarbonates.

As the amphiphilic polymers (X2-2), for example, a polyacrylamide such as poly(N-isobutylacrylamide) or poly(N,N-dimethylacrylamide); a polyoxazoline such as polymethyloxazoline, polyethyloxazoline, polyvinyloxazoline, or polyphenyloxazoline; or polypropylenoxide can be preferably used.

As the long-chain alkyl group-containing compounds (X2-3), an alkylamine, alkyl carboxylic acid, alkyl sulfonic acid, alkyl phosphoric acid, or the like, which is a compound having an alkyl group having 6 to 22 carbon atoms can be preferably used.

As the fluorine-containing compounds (X2-4), for example, 2,3,4-heptafluorobutyl methacrylate, FLUONATE K-700, K-702, K-703, K-704, K-705, K-707, or K-708 manufactured by DIC Corporation, or the like can be preferably used.

### [Process for producing superhydrophobic powders to which superhydrophobic groups are introduced by physical adsorption]

In order to efficiently physically adsorbing the above-mentioned compounds (X2) each having the hydrophobic group, which can decrease the surface energy, onto silica (B) present on the surface of the aggregates of the nanofibers (I) or the nanofibers (II), it is sufficient that one or several types of the compounds are dissolved in a solvent, the nanofibers (I) or the nanofibers (II) are dispersed in the resulting solution, and the resulting dispersion is stirred at room temperature, for example, at 20°C to 30°C for 1 to 24 hours.

Preferably, the solvent can dissolve the compounds (X2) and also has an affinity with silica. Specifically, examples of the solvent include toluene, furan-tetrahydride, methylene chloride, chloroform, methyl ethyl ketone, cyclohexanone, and xylene.

When the concentration of the compounds (X2) in the solution is 1% to 5% by mass, the solution can be suitably used. In this case, a mass ratio (X2)/(I) or (II) of the compounds (X2) to the nanofibers (I) or (II) is preferably controlled to be 5/100 to 100/100. In this case, it is preferable to appropriately add the above-mentioned solvent so that the concentration of the nanofibers (I) or (II) is 1% to 10% by mass. Alternatively, a method may be employed in which the nanofibers (I) or (II) are dispersed in advance in a solvent that is miscible with a solvent in which the compounds (X2) is dispersed, and the resulting dispersion is then added to the solvent containing the compounds (X2) and stirred.

Mixing is conducted under stirring for a certain period of time, and the resulting mixture is then filtered or centrifuged. The solid component is washed with a solvent such as toluene, chloroform, hexane, or cyclohexane and dried at ordinary temperature. Thus, superhydrophobic powders of the present invention can be obtained.

The superhydrophobic powders of the present invention obtained by the above methods have no wettability of water. Even when the powders are dispersed in water, the powders only float on the water surface as a powder. This is completely different from the case of the powders before the introduction of the hydrophobic group, which became completely submerged in water.

### [Superhydrophobic surface using superhydrophobic powders]

A structure with a superhydrophobic surface can be obtained by adhesively fixing the superhydrophobic powders of the present invention to a surface of a solid substrate. The adhesive fixing can be easily realized by mixing the powders with a polymer solution, a silica sol solution, a commercially available coating or adhesive, or the like, applying the mixed liquid onto the surface of the substrate, and conducting drying or the like as required.

The superhydrophobic surface is in a state in which the superhydrophobic powders are fixed to the surface of a coating film. That is, the superhydrophobic surface is characterized in that a polymer, a silica sol, or the like forms a continuous film as a binder, and structures derived from the superhydrophobic powders of the present invention are distributed at certain intervals on the surface of the continuous film.

The polymer used as the binder layer is not particularly limited so long as the polymer is a hydrophobic polymer. Examples of the hydrophobic polymer include polystyrene, polyvinyl chloride, polymethacrylates, polyacrylates, polycarbonates, polyesters, and epoxy resins.

Among the superhydrophobic powders of the present invention, in a powder to which the reactive functional group has been introduced by chemical bonding, when the reactive functional group is a glycidyl group or an amino group, the reactive functional group can be firmly fixed to the surface of the resulting coating film by using an epoxy resin as a binder resin. When the reactive functional group is a (meth)acryloyl group, the reactive functional group can be firmly fixed by using a monomer having a (meth)acryloyl group in combination and performing UV curing. For other reactive functional groups, by appropriately selecting the binder resin in accordance with the type of reactive functional group that has been introduced into the surface of the superhydrophobic powders, structures with a highly stable superhydrophobic surface can be obtained.

Furthermore, a silica sol, a metal oxide sol, or the like that is dispersed in an alcohol may be used as the binder layer. In such a case, examples of the alcohol include methanol, ethanol, and isopropanol.

Furthermore, a usually commercially available coating or a commercially available adhesive may also be used as the binder layer of the coating film.

The contact angle of the superhydrophobic surface obtained above can be changed in the range of 150° to 179°. The higher the density of particles of the superhydrophobic powders on the surface, the more the contact angle improves. In order to obtain a surface, the target hydrophobic level of which is lower than this, for example, to obtain a surface having a general hydrophobic level with a contact angle of 70° to 150°, it is sufficient that the use ratio of the superhydrophobic powders of the present invention is decreased to decrease the density of particles of the powder.

The solid substrate can be selected in accordance with the material used as the binder layer. Examples of the solid substrate include glass, metals, metal oxides, wood, paper, fibers, plastics, rubber, and leather. The shape of the solid substrate is also not particularly limited as long as a polymer solution or a silica sol can be applied onto the substrate.

The method for adhesively fixing the superhydrophobic powders to a surface of the solid substrate is also not particularly limited. A coating liquid containing the powders may be appropriately applied by a commonly used coating method using a spin coater, a bar coater, brushing, a spray, or the like.

Furthermore, in accordance with the properties of the binder layer used for forming a coating film, a film obtained by application can also be cured in a step of UV curing, heat curing, natural drying, or the like.

The superhydrophobic powders of the present invention are easily wet with organic solvents other than water and can be easily dispersed in the organic solvents. Accordingly, a medium in which the binder can be dissolved or dispersed may be a solvent other than water, and a mixed medium of an organic solvent and water may also be used.

A ratio of a binder portion and superhydrophobic powders portion in the coating liquid for preparing a surface may be in the range of binder/powders = 60/50 to 99/1 (mass ratio). The solid content of the coating liquid can be appropriately determined within the range of the above composition ratio.

In particular, in preparation of a superhydrophobic surface, the superhydrophobic powders must be in a state in which the powders are uniformly exposed to a surface of a coating film. For this purpose, it is desirable to control the thickness of the coating film to be within a certain range, for example, 0.1 to 20 µm. The smaller the thickness of the coating film, the more significantly the powders protrude from the surface of the coating film, and thus the contact angle with water can be increased.

The horizontal distance between particles of the powder exposed on the surface of the coating film is an important structural element for exhibiting superhydrophobicity of the entire film. When the horizontal distance between the particle structures is 1 to 20 µm, superhydrophobicity can be sufficiently exhibited. However, even when the distance is larger than this, the contact angle with water can be increased to about 150°. It is preferable to appropriately adjust the distance in accordance with the intended application.

### EXAMPLES

The present invention will now be described in more detail by way of Examples. It should be noted that "%" represents "mass percent" unless otherwise stated.

### [Shape analysis of aggregate of nanofibers or powders with scanning electron microscope (SEM)]

Aggregates or powders that were isolated and dried were fixed to a sample supporting stage with a double-sided tape and observed with a surface observation device VE-9800 manufactured by Keyence Corporation.

### [Observation of nanostructure with transmission electron microscope]

A powdery sample was dispersed in methanol, and the resulting dispersion was placed on a copper grid and was observed with a transmission electron microscope "JEM-2200FS" manufactured by JEOL Ltd.

### [Measurement of contact angle]

The contact angle was measured with an automatic contact angle meter Contact Angle System OCA (produced by Dataphysics Instruments GmbH).

### [Differential thermogravimetric analysis]

The content of compounds (X) having a hydrophobic group, the compounds (X) being adsorbed on silica nanofibers, was measured with a TG-DTA 6300 (manufactured by SII NanoTechnology Inc.).

### [Measurement of specific surface area]

The specific surface area was measured with FlowSorb II 2300 (manufactured by Micrometrics Instrument Corporation).

### Synthesis Example 1

### [Synthesis of aggregates of organic/inorganic composite nanofibers (I)]

Powders having different shapes were prepared by the methods disclosed in patent literatures (Japanese Unexamined Patent Application Publication No. 2005-264421, Japanese Unexamined Patent Application Publication No. 2005-336440, Japanese Unexamined Patent Application Publication No. 2006-063097, and Japanese Unexamined Patent Application Publication No. 2007-051056).

Five grams of commercially available polyethyloxazoline (number-average molecular weight: 500,000, average degree of polymerization: 5,000, manufactured by Aldrich) was dissolved in 20 mL of a 5M aqueous hydrochloric acid solution. The solution was heated to 90°C in an oil bath, and was stirred at the temperature for 10 hours. Next, 50
mL of acetone was added to the reaction solution to completely precipitate the polymer. The precipitate was filtered and washed with methanol three times to obtain a white polyethyleneimine powders. The powders were identified with ¹H-NMR (heavy water). It was confirmed that peaks at 1.2 ppm (CH₃) and 2.3 ppm (CH₂) attributable to the side-chain ethyl group of polyethyloxazoline completely disappeared. That is, it was shown that polyethyloxazoline was completely hydrolyzed and converted to polyethyleneimine.

The powders were dissolved in 5 mL of distilled water, and 50 mL of a 15% aqueous ammonia was added dropwise to the solution while stirring. The resulting mixed liquid was left to stand for one night. Precipitated powders were then filtered, and the powders were washed with cold water three times. The powders after the washing were dried in a desiccator at room temperature (25°C) to obtain linear polyethyleneimine (P5K-1). The yield was 4.5 g (including crystal water). As for polyethyleneimine obtained by hydrolysis of polyoxazoline, only the side chain reacts and the main chain does not change. Accordingly, the degree of polymerization of P5K-1 is the same as 5,000, which is the degree of polymerization before the hydrolysis.

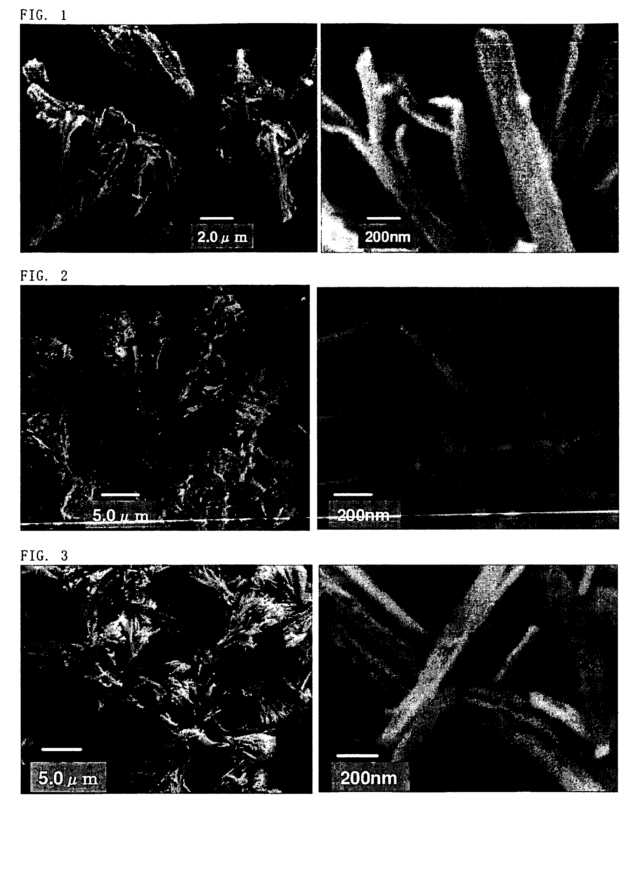

A certain amount of P5K-1 was mixed in distilled water, and the mixture was heated to 90°C to obtain a transparent solution. The solution was then prepared to a total 3% aqueous solution. The aqueous solution was left to cool at room temperature to obtain a stark white aggregate liquid of P5K-1. Subsequently, 70 mL of an ethanol solution (volume concentration: 50%) of tetramethoxysilane (TMOS) was added to 100 mL of the aggregate liquid while stirring, and stirring was continued at room temperature for one hour. Precipitated sediment was filtered and washed with ethanol three times. The sediment was then dried by heating at 40°C, thereby obtaining 15 g of powders (I-1). Fig. 1 shows SEM photographs of the prepared powders (I-1). It was confirmed that the powders were composed of aggregates of nanofibers.

From a thermogravimetric loss analysis (TG-DTA 6300 manufactured by SII NanoTechnology Inc.) of the powders (I-1) thus obtained, it was confirmed that the polymer content was 7%. According to a measurement result of the specific surface area (FlowSorb II 2300 manufactured by Micrometrics Instrument Corporation), the specific surface area of the powders (I-1) was 105 m²/g.

### Synthesis Example 2

### [Synthesis of aggregates of nanofibers (II) containing silica as main constituent component]

Five grams of the powders (I-1) obtained in Synthesis Example 1 were heated in an electric furnace at 600°C for two hours under the condition of introducing air to remove polyethyleneimine contained in the powders (I-1). Thus, white powders (II-1) were obtained. The specific surface area of the powders (II-1) was 187 m²/g. Fig. 2 shows SEM photographs of the powders (II-1). It was suggested that the structure of nanofibers after calcining did not change.

### Example 1

### [Synthesis of superhydrophobic powders 1]

First, 50 mL of an ethanol solution of 2% ammonia and 5 mL of a chloroform solution of 20% decyltrimethoxysilane (DTMS) were mixed, and 0.5 g of the powders (I-1) were added to the mixed solution. The resulting mixture was stirred at room temperature for 24 hours. The reaction mixture was filtered, and the resulting powders were then washed with ethanol three times. The powders after drying floated on the water surface without being submerged under water at all. This was completely different from the tendency of the powders (I-1) before the hydrophobizing treatment, which became completely submerged in water.

The prepared powders were adhered to a double-sided tape to form a surface composed of the powders, and the contact angle of the surface was then measured. The contact angle with water was 177.5°. It was strongly suggested that the surface was superhydrophobic when in the form of a film composed of the powders. Tease powders are referred to as "superhydrophobic powders 1".

### Example 2

### [Synthesis of superhydrophobic powders 2]

First, 50 mL of an ethanol solution of 2% ammonia and 5 mL of a chloroform solution of 20% decyltrimethoxysilane (DTMS) were mixed, and 0.5 g of the powders (II-1) were added to the mixed solution. The resulting mixture was stirred at room temperature for 24 hours. The reaction mixture was filtered, and the resulting powders were then washed with ethanol three times. A thermogravimetric loss (between 150°C to 800°C) of the powders after drying was 8.4%. This corresponds to the amount of an organic residue due to the introduction of the silane coupling agents. Tease powders floated on the water surface without being submerged under water at all. This was completely different from the tendency of the powders (II-1) before the hydrophobizing treatment, which became completely submerged in water. Fig. 3 shows SEM photographs of the powders.

The prepared powders were adhered to a double-sided tape to form a surface composed of the powders, and the contact angle of the surface was then measured. The contact angle with water exceeded 179°. It was strongly suggested that the surface was superhydrophobic when in the form of a film composed of the powders. Tease powders are referred to as "superhydrophobic powders 2".

### Example 3

### [Synthesis of superhydrophobic powders 3]

First, 50 mL of an ethanol solution of 2% ammonia and 5 mL of a chloroform solution containing 6% silane coupling agents [5% decyltrimethoxysilane (DTMS) and 1% aminopropyltrimethoxysilane (ATMS)] were mixed, and 0.5 g of the powders (II-1) were added to the mixed solution. The resulting mixture was stirred at room temperature for 24 hours. The reaction mixture was filtered, and the resulting powders were then washed with ethanol three times. A thermogravimetric loss (between 150°C to 800°C) of the powders after drying was 7.5%. The powders floated on the water surface without being submerged under water at all.

The prepared powders were adhered to a double-sided tape to form a surface composed of the powders, and the contact angle of the surface was then measured. The contact angle with water was 168°. It was strongly suggested that the surface was superhydrophobic when in the form of a film composed of the powders. Tease powders are referred to as "superhydrophobic powders 3".

### Example 4

### [Synthesis of superhydrophobic powders 4]

First, 50 mL of an ethanol solution of 2% ammonia and 5 mL of a chloroform solution containing 6% silane coupling agents [5% decyltrimethoxysilane (DTMS) and 1% methacryloylpropyltrimethoxysilane (ATMS)] were mixed, and 0.5 g of the powders (II-1) were added to the mixed solution. The resulting mixture was stirred at room temperature for 24 hours. The reaction mixture was filtered, and the resulting powders were then washed with ethanol three times. A thermogravimetric loss (between 150°C to 800°C) of the powders after drying was 8.3%. The powders after drying floated on the water surface without being submerged under water at all.

The prepared powders were adhered to a double-sided tape to form a surface composed of the powders, and the contact angle of the surface was then measured. The contact angle with water was 176°. It was strongly suggested that the surface was superhydrophobic when in the form of a film composed of the powders. Tease powders are referred to as "superhydrophobic powders 4".

### Example 5

### [Superhydrophobic film on filter paper using superhydrophobic powders 2 (immersion method)]

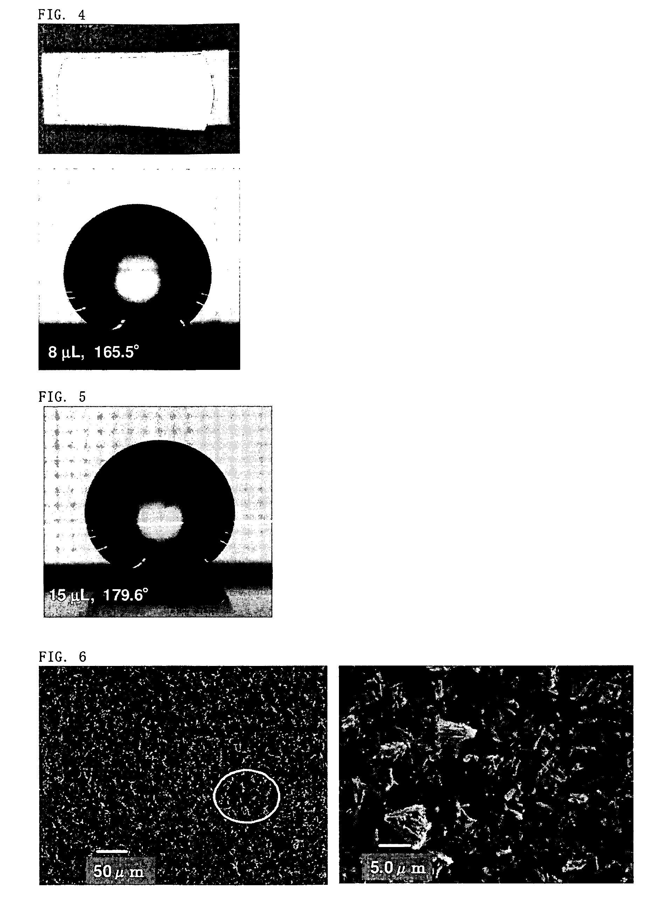

A 1% toluene solution was prepared using commercially available polystyrene (manufactured by Aldrich, Mw = 45,000). Next, 10 mg of the superhydrophobic powder 2 were added to 0.5 mL of the solution, and uniformly dispersed. A filter paper was then immersed in the dispersion for 15 minutes. The filter paper was taken out and dried at room temperature. A water droplet was then dropped on the filter paper, but the water droplet was completely repelled. The contact angle was 165.5°. Fig. 4 shows the coating film and a contact image.

### Example 6

### [Superhydrophobic film on filter paper using superhydrophobic powders 2 (brush method)]

A dispersion similar to that used in Example 5 was applied onto a filter paper with a brush. The filter paper was dried at room temperature, and the surface contact angle was then measured. The contact angle was 178°. The filter paper was not wet with water.

### Example 7

### [Superhydrophobic film on glass using superhydrophobic powders 2 (casting method)]

A dispersion similar to that used in Example 5 was cast onto a glass slide using a bar coater. The cast film thus obtained was dried at room temperature, and the surface contact angle was then measured. The contact angle was 179.6° (15 µL water droplet) (Fig. 5).

The surface of this glass was observed with a SEM (Fig. 6). The SEM photograph image shows that particles derived from the powders spread in a fixed state on the surface of the film. The enlarged image shows that the particles are dispersed at intervals of 5 µm or more.

### Example 8

### [Superhydrophobic film on wood using superhydrophobic powders 2 (brush method)]

A dispersion similar to that used in Example 5 was applied onto a non-surface-treated wooden plate with a brush. The wooden plate was dried at room temperature, and a water droplet was then dropped on the wooden plate. The water was completely repelled, and the surface of the wood was not wet.

### Example 9

### [Superhydrophobic film on cow leather using superhydrophobic powders 2 (immersion method)]

A 1% chloroform solution was prepared using commercially available polymethylmethacrylate (manufactured by Aldrich, Mw = 120,000, manufacturer/part number). Next, 10 mg of the superhydrophobic powders 2 were added to 0.5 mL of the solution, and uniformly dispersed. A clipping of non-surface-treated cow leather was then immersed in the dispersion for one hour. The cow leather was taken out and dried at room temperature. A water droplet was then dropped on the leather, but the water droplet was completely repelled and wettability disappeared.

### Example 10

### [Superhydrophobic film on stainless steel plate using superhydrophobic powders 2 (brush method)]

A dispersion similar to that used in Example 9 was applied onto a stainless steel petri dish (manufactured by Takizawa Rika, 50 x 50 x 0.6 mm) with a brush. The petri dish was dried at room temperature. A water droplet was then dropped on the petri dish, but the water was completely repelled and the metal surface was not wet.

### Example 11

### [Superhydrophobic film on inner wall of glass tube using superhydrophobic powders 2 (immersion method)]

A dispersion similar to that used in Example 9 was suctioned into a glass pipette (inner diameter: 6 mm, length: 8 cm). The glass pipette was allowed to stand for two hours, and the liquid was then pushed out. The glass pipette was dried at room temperature. Subsequently, a test was conducted in which water was suctioned into the glass pipette and the water was again pushed out. No water droplets adhered to the glass wall, and the suctioned water could be completely transferred to another container without decreasing its weight.

In the case where an untreated glass pipette was used for comparison, it was confirmed that when water was suctioned and the water was then pushed out, water droplets adhered to the wall with certainty.

### Synthesis Example 3

One hundred grams of commercially available polyethyloxazoline (number-average molecular weight: 500,000, average degree of polymerization: 5,000, manufactured by Aldrich) was dissolved in 300 mL of a 5M aqueous hydrochloric acid solution. The solution was heated to 90°C in an oil bath, and was stirred at the temperature for 10 hours. Next, 50 mL of acetone was added to the reaction solution to completely precipitate the polymer. The precipitate was filtered and washed with methanol three times to obtain white polyethyleneimine powders. The powders were identified with ¹H-NMR (heavy water). It was confirmed that peaks at 1.2 ppm (CH₃) and 2.3 ppm (CH₂) attributable to the side-chain ethyl group of polyethyloxazoline completely disappeared. That is, it was shown that polyethyloxazoline was completely hydrolyzed and converted to polyethyleneimine.

The powders were dissolved in 100 mL of distilled water, and 500 mL of 15% aqueous ammonia was added dropwise to the solution while stirring. The resulting mixed liquid was left to stand for one night. Precipitated powders were then filtered, and the powders were washed with cold water three times. The powders after washing dried in a desiccator at room temperature (25°C) to obtain linear polyethyleneimine (P5K-2). The yield was 94 g (including crystal water). As for polyethyleneimine obtained by hydrolysis of polyoxazoline, only the side chain reacts and the main chain does not change. Accordingly, the degree of polymerization of P5K-2 is the same as 5,000, which is the degree of polymerization before the hydrolysis.

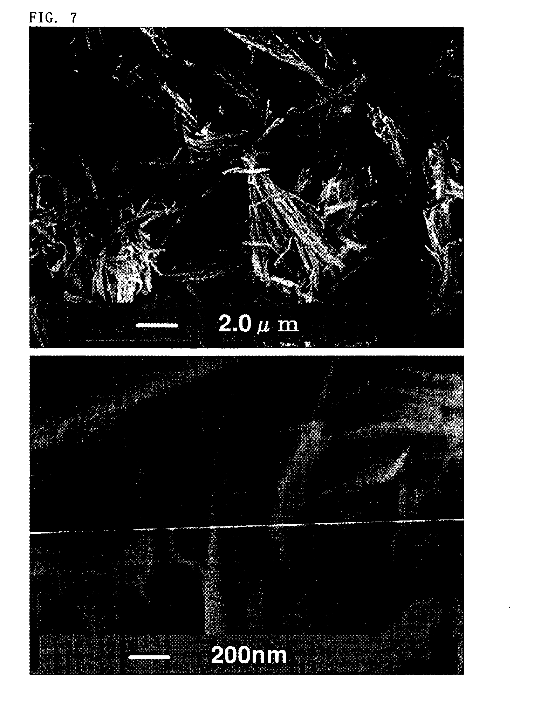

A certain amount of P5K-2 was mixed in distilled water, and the mixture was heated to 90°C to obtain a transparent solution. The solution was then prepared to a total 3% aqueous solution. The aqueous solution was left to cool at room temperature to obtain a stark white aggregate liquid of P5K-2. Subsequently, 70 mL of an ethanol solution (volume concentration: 50%) of MS51 (pentamer of methoxysilane) was added to 100 mL of the aggregate liquid while stirring, and stirring was continued at room temperature for one hour. Precipitated sediment was filtered and washed with ethanol three times. The sediments were then dried by heating at 40°C, thereby obtaining 16 g of powders (I-2). Fig. 7 shows SEM photographs of the prepared powders (I-2). It was confirmed that the powders were composed of aggregates of nanofibers.

From a thermogravimetric loss analysis of the powder obtained above, it was confirmed that the content of polyethyleneimine was 7%. According to a measurement result of the specific surface area, the specific surface area of the powders was 132 m²/g.

### Synthesis Example 4

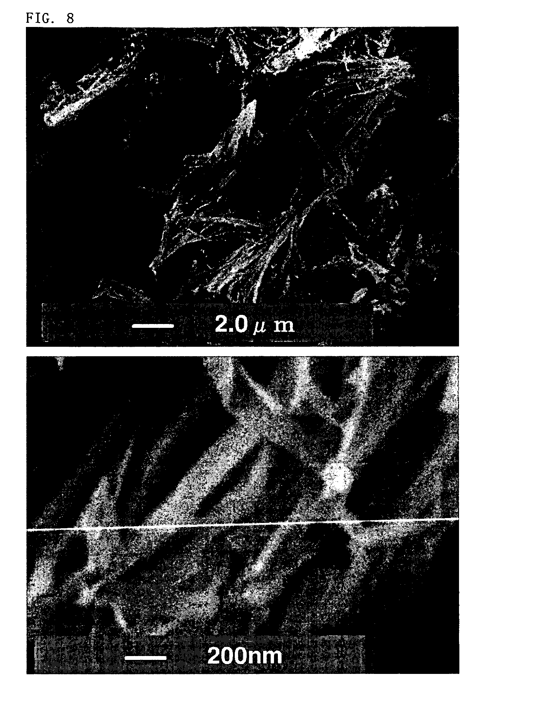

Five grams of the powders (I-2) obtained in Synthesis Example 3 were heated in an electric furnace at 600°C for two hours under the condition of introducing air to remove polyethyleneimine contained in the powder (I-2). Thus, white powders (II-2) were obtained. The specific surface area of the powders (II-2) was 208 m²/g. Fig. 8 shows SEM photographs of the powder (II-2). It was suggested that the structure of nanofibers after calcining did not change.

### Example 12

### [Synthesis of superhydrophobic powders 5 to which polybutylacrylate is adsorbed]

First, 200 mg of polybutylacrylate was dissolved in 20 mL of toluene, and 200 mg of the powders (I-2) were added to the solution. The mixture was stirred at room temperature for three hours. The mixed liquid was filtered, and the resulting powders were then washed with toluene three times. The powders after drying floated on the water surface without being submerged under water. This was completely different from the tendency of the powders (I-2) before the hydrophobizing treatment, which became completely submerged in water.

The prepared powders were adhered to a double-sided tape to form a surface composed of the powders, and the contact angle of the surface was then measured. The contact angle with water was 178.4°. It was strongly suggested that the surface was superhydrophobic when in the form of a film composed of the powders. Tease powders are referred to as "superhydrophobic powders 5".

### Example 13

### [Synthesis of superhydrophobic powders 2 to which polymethylmethacrylate is adsorbed]

The powders were prepared as in Example 12 except that, in Example 12, polymethylmethacrylate was used instead of polybutylacrylate. The powders after drying floated on the water surface without being submerged under water.

The contact angle with water was measured using the prepared powders as in Example 12. The contact angle with water exceeded 174°. It was strongly suggested that the surface was superhydrophobic when in the form of a film composed of the powders. Tease powders are referred to as "superhydrophobic powders 6".

### Example 14

### [Synthesis of superhydrophobic powders 3 to which polyethylmethacrylate is adsorbed]

A powder was prepared as in Example 12 except that, in Example 12, polyethylmethacrylate was used instead of polybutylacrylate and the powders (II-2) were used instead of the powders (I-2). The powders after drying floated on the water surface without being submerged under water. This was completely different from the tendency of the powders (II-2) before the hydrophobizing treatment, which became completely submerged in water. According to an analytical result of the thermogravimetric loss, the adsorption ratio of the polymer was 12.9%.

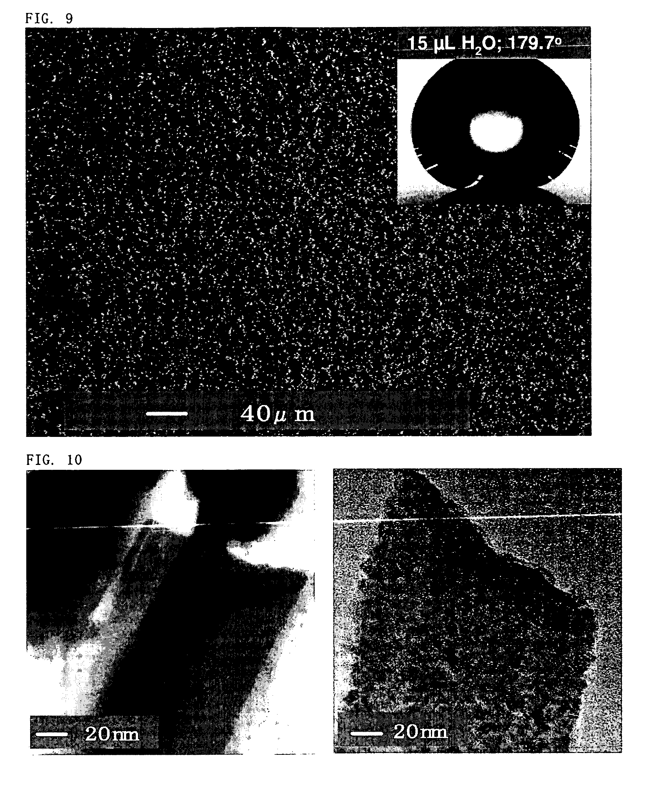

The contact angle with water was measured using the prepared powders as in Example 12. The contact angle with water was 179.7° (refer to Fig. 9). It was strongly suggested that the surface was superhydrophobic when in the form of a film composed of the powders. These powders are referred to as "superhydrophobic powders 7".

Fig. 10 shows TEM photographs of the powders 7. It was observed that although the silica surface of the powders (II-2) before the polymer adsorption was smooth, particles having a size of several nanometers spread over the entire silica surface after the polymer adsorption. That is, it was confirmed that the polymer formed a thin film on the nanometer order on the surfaces of the nanofibers.

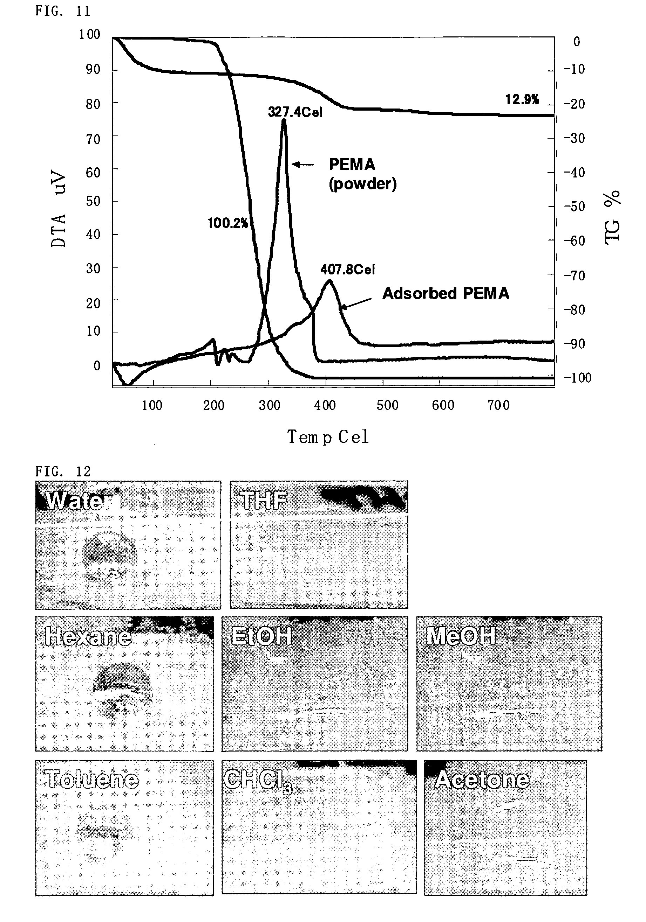

Fig. 11 shows a thermal analysis chart of these powders. The thermal decomposition temperature of the polymer alone was about 327°C. However, heat resistance of the polymer adsorbed to the powders 7 improved, and the thermal decomposition temperature was shifted to 409°C. It is believed that the polymer adsorbed on the surfaces of the nanofibers in the form of nano-thin film formed a hybrid structure with silica on the nanometer order.

The powders 7 were immersed in various solvents for one week. The powders 7 were then filtered and dried at room temperature. The powders obtained after this treatment were adhered to a double-sided tape, and a water droplet was then dropped thereon to examine the wettability. Fig. 12 shows wet states of the water droplets. On the surfaces each prepared by allowing the powders obtained after the immersion in water, hexane, or toluene to adhere to the double-sided tape, the water droplet was in a spherical state and no wettability was observed. However, on the surfaces each prepared by allowing the powders obtained after the immersion in methanol, ethanol, chloroform, acetone, or THF to adhere to the double-sided tape, all the surfaces were in a state of being wet with water.

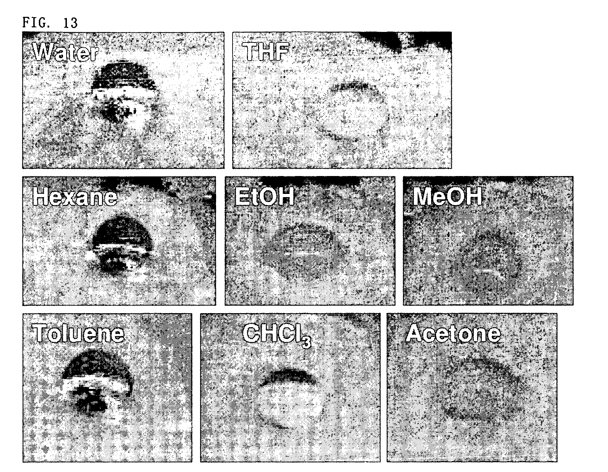

The tapes obtained after checking the wettability were left to stand in a dryer and heated at 80°C for two hours. The tapes were taken out, and the wettability was again examined in a room temperature state. Fig. 13 shows the wet states. In the systems after the immersion in water, hexane, or toluene, no wetting tendency was still observed, and the water droplets were in a spherical state. Similarly, in the systems after the immersion in methanol, ethanol, chloroform, acetone, or THF, the surfaces were not easily wet with water droplets, the spread of water droplets observed in Fig. 12 did not occur, and the water droplets maintained an elliptical shape or a spherical shape.

From the above results of Figs. 12 and 13, it is strongly suggested that even when the powders 7 was immersed in a nonpolar solvent or a polar solvent, polyethylmethacrylate adsorbed on the surface is not detached. The results of Figs. 12 and 13 also strongly suggest the following: When the powders 7 were immersed in a polar solvent and then dried at room temperature, the surface energy of a microstructural domain of the polymer adsorbed on the surfaces of the silica nanofibers is somewhat changed by the polar solvent, and this change increases the wettability. However, by heat-treating the powder, the surface energy returns to the original decreased state to prevent the increase in the wettability.

### Example 15

### [Synthesis of superhydrophobic powders 8 to which fluorine-containing compound is adsorbed]

Powders were prepared as in Example 14 except that, in Example 14, 200 mg of poly(2,3,4-heptafluorobutyl methacrylate) was used instead of polyethylmethacrylate. The powders after drying floated on the water surface without being submerged under water. According to an analytical result of the thermogravimetric loss, the adsorption ratio of the polymer was 9.8%. These powders are referred to as "superhydrophobic powders 8".

The contact angle with water was measured using the prepared powders 8 as in Example 12. The contact angle with water was 179.6°. In addition, even the contact angle with an aqueous alcohol solution containing 30% ethyl alcohol was 168°. Furthermore, even with an aqueous solution of 50% alcohol, the surface was not wet. Note that, in the powders 7 obtained in Example 14, the contact angle with an aqueous solution of 30% alcohol is 48°. It is believed that this is based on the result that the capability of decreasing the surface free energy due to fluorine atoms was also exhibited for alcohols, and a repelling effect was achieved.

### Example 16

### [Synthesis of superhydrophobic powders 9 to which tetradecylamine is adsorbed]

Powders were prepared as in Example 14 except that, in Example 14, tetradecylamine was used instead of polyethylmethacrylate, and the stirring time at room temperature was changed to six hours. The powders after drying floated on the water surface without being submerged under water. According to an analytical result of the thermogravimetric loss, the adsorption ratio of tetradecylamine was 10.5%. These powders are referred to as "superhydrophobic powders 9".

The contact angle with water was measured using the prepared powders 9 as in Example 12. The contact angle with water was 175°. It was strongly suggested that the surface was superhydrophobic when in the form of a film composed of the powders.

### Example 17

### [Synthesis of superhydrophobic powders 10 to which poly(ethyloxazoline) is adsorbed]

Powders were prepared as in Example 14 except that, in Example 14, poly(ethyloxazoline) was used instead of polyethylmethacrylate. The powders after drying floated on the water surface without being submerged under water. According to an analytical result of the thermogravimetric loss, the adsorption ratio of poly(ethyloxazoline) was 11.3%. These powders are referred to as "superhydrophobic powders 10".

The contact angle with water was measured using the prepared powders 10 as in Example 12. The contact angle with water was 167°. It was strongly suggested that the surface was superhydrophobic when in the form of a film composed of the powders. Poly(ethyloxazoline) is an amphiphilic polymer that is dissolved in both water and organic solvents. It is believed that when poly(ethyloxazoline) is adsorbed to the powders (II-2), a polar portion of the polymer is strongly bonded to silica so that the ethyl group of the side chain is oriented to the surface, thereby exhibiting superhydrophobicity.

### Example 18

### [Superhydrophobic film on filter paper using superhydrophobic powders 7 (immersion method)]

The superhydrophobic powders 7 (10 mg) obtained in Example 14 were added to 500 mg of an aqueous polyurethane resin (manufactured by DIC Corporation, nonionic resin, nonvolatile matter being controlled to be 10% by adding water) and uniformly dispersed. A filter paper was then immersed in the dispersion for 15 minutes. The filter paper was taken out and dried at room temperature. A water droplet was then dropped on the filter paper, but the water droplet was completely repelled.

### Example 19

### [Superhydrophobic film on filter paper using superhydrophobic powders 7 (brush method)]

A dispersion similar to that used in Example 18 was applied onto a filter paper with a brush. The filter paper was dried at room temperature, and the surface contact angle was then measured. The contact angle was 154°. The filter paper was not wet with water.

### Example 20

### [Superhydrophobic film on glass using superhydrophobic powders 7 (casting method)]

A dispersion similar to that used in Example 18 was cast onto a glass slide using a bar coater. The cast film thus obtained was dried at room temperature, and the surface contact angle was then measured. The contact angle was 166°.

### Example 21

### [Superhydrophobic film on wood using superhydrophobic powders 7 (brush method)]

A dispersion similar to that used in Example 18 was applied onto a non-surface-treated wooden plate with a brush. The wooden plate was dried at room temperature, and a water droplet was then dropped on the wooden plate. The water was completely repelled, and the surface of the wood was not wet.

### Example 22

### [Superhydrophobic film on cow leather using superhydrophobic powders 10 (immersion method)]

A dispersion was prepared as in Example 18 except that, in Example 18, the superhydrophobic powders 10 obtained in Example 17 was used instead of the superhydrophobic powders 7. A clipping of non-surface-treated cow leather was immersed in the dispersion for one hour. The cow leather was taken out and dried at room temperature. A water droplet was then dropped on the leather, but the water droplet was completely repelled and wettability disappeared.

### Example 23

### [Superhydrophobic film on inner wall of glass tube using superhydrophobic powders 6 (immersion method)]

A dispersion was prepared as in Example 18 except that, in Example 18, the superhydrophobic powders 6 obtained in Example 13 was used instead of the superhydrophobic powders 7. This dispersion was suctioned into a glass pipette (inner diameter: 6 mm, length: 8 cm). The glass pipette was allowed to stand for two hours, and the liquid was then pushed out. The glass pipette was dried at 60°C. Subsequently, a test was conducted in which water was suctioned into the glass pipette and the water was again pushed out. No water droplets adhered to the glass wall, and the suctioned water could be completely transferred to another container without decreasing its weight.

In the case where an untreated glass pipette was used for comparison, it was confirmed that when water was suctioned and the water was then pushed out, water droplets adhered to the wall with certainty.

### [Stability evaluation 1]

A stability evaluation was conducted by the method described below using the superhydrophobic powders 5, 7, 8, and 10 obtained in Examples 12, 14, 15, and 17, respectively. To a glass bottle, 30 mL of distilled water was put, and 20 mg of each powders were added thereto. A stirrer bar was put therein, and stirring was continued at room temperature (25°C) for seven days. The behavior of the powders was then observed. It was confirmed that when the stirring was stopped, each of the powders floated on the water surface and did not submerge under water again.

In addition, the contact angles were measured in the form of a film as in Examples. All the powders had the same contact angles as those before the stirring in water. It was confirmed that superhydrophobicity was maintained.

Furthermore, regarding the superhydrophobic powders 8 obtained after the stirring in water, the contact angle with an aqueous alcohol solution containing 30% ethyl alcohol was measured as in Examples. The contact angle was 167°, and it was confirmed that the performance was maintained.

### [Stability evaluation 2]

The dispersion obtained in Example 18 was maintained in a thermostatic chamber at 30°C for seven days. The dispersion was then applied onto a filter paper as in Example 21 and dried. After the drying, the contact angle with water was measured. The contact angle with water was 156°, and thus it was confirmed that superhydrophobicity was maintained also in an aqueous coating.

### Industrial Applicability

The superhydrophobic powders of the present invention can be applied to protective films for structures such as buildings, car bodies, ships and vessels, container structures, packages, glassware, earthenware (lavatory pan, entire bathroom), pools, water pipes, electric wires, electric lamps, and various covers. Furthermore, the superhydrophobic powders can also be used for surface coating for household electrical appliances such as a refrigerator, a microwave oven, and a washing machine; and electrical products for communication, such as a personal computer, a television, and a mobile phone. In addition, the superhydrophobic powders can also be used for fuel cell devices related to energy conversion.

## Claims

1. The superhydrophobic powders comprising aggregates of organic/inorganic composite nanofibers (I), constructed with silica (B) shell having the hydrophobic group which coats filaments of a polymer (A) having a linear polyethyleneimine backbone (a).

2. The superhydrophobic powders according to Claim 1, wherein the silica (B) shell having the hydrophobic group is obtained by chemically bonding a compound (X1) having a hydrophobic group to silica.

3. The superhydrophobic powders according to Claim 2, wherein a compound (Y) having a reactive functional group are further chemically bonded to the silica (B) shell having the hydrophobic group.

4. The superhydrophobic powders according to Claim 1, wherein the silica (B) shell having the hydrophobic group is obtained by physically adsorbing a compound (X2) having a hydrophobic group to silica.

5. The superhydrophobic powders according to any one of Claims 1 to 4, wherein the organic/inorganic nanofibers (I) each have a thickness of 10 to 100 nm and an aspect ratio of 10 or more, and the aggregates of the organic/inorganic nanofibers (I) each have a size in the range of 2 to 100 µm.

6. The superhydrophobic powders comprising aggregates of nanofibers (II) containing silica (B) as a main constituent component, wherein the silica (B) has a hydrophobic group.

7. The superhydrophobic powders according to Claim 6, wherein the silica (B) is obtained by chemically bonding a compound (X1) having a hydrophobic group.

8. The superhydrophobic powders according to Claim 7, wherein a compound (Y) having a reactive functional group are further chemically bonded to the silica (B).

9. The superhydrophobic powders according to Claim 6, wherein the silica (B) is obtained by physically adsorbing a compound (X2) having a hydrophobic group.

10. The superhydrophobic powders according to any one of Claims 6 to 9, wherein the nanofibers (II) each have a thickness of 10 to 100 nm and an aspect ratio of 10 or more, and the aggregates of the nanofibers (II) each have a size in the range of 2 to 100 µm.

11. A process for producing superhydrophobic powders comprising a step of dispersing, in a solvent, powders composed of aggregates of organic/inorganic composite nanofibers (I) constructed with silica (B) shell which coats filaments of a polymer (A) having a linear polyethyleneimine backbone (a), and mixing a compound having a hydrophobic group with the resulting dispersion.

12. A process for producing superhydrophobic powders comprising:
a step of (1) calcining aggregates of organic/inorganic composite nanofibers (I) constructed with silica (B) shell which coats filaments of a polymer (A) having a linear polyethyleneimine backbone (a); and
a step of (2) dispersing, in a solvent, powders composed of aggregates of nanofibers (II) containing the silica (B) obtained in (1) as a main constituent component, and mixing a compound having a hydrophobic group with the resulting dispersion.

13. A structure with a superhydrophobic surface comprising the superhydrophobic powders according to any one of Claims 1 to 10 and a solid substrate, the superhydrophobic powders being fixed to a surface of the solid substrate.

14. A process for producing a structure with a superhydrophobic surface comprising a step of dispersing the superhydrophobic powders according to any one of Claims 1 to 10 in a solution, and applying and drying the resulting dispersion.
